# FASCICULE DE BREVET EUROPEEN

(11) **EP 1 412 824 B1**
(45) Date de publication et mention de la délivrance du brevet: **08.03.2006**
(21) Numéro de dépôt: 02770060.8
(22) Date de dépôt: 30.07.2002
(51) Int. Cl.: G05B 19/042

(54) **PROCEDE POUR MODIFIER LE FONCTIONNEMENT D'UN DISPOSITIF ELECTRONIQUE COMPORTANT UN SYSTEME DE DETECTION A INFRAROUGE**
VERFAHREN ZUR ÄNDERUNG DES BETRIEBS EINER ELEKTRONISCHEN VORRICHTUNG MIT INFRAROT DETEKTIONSSYSTEM
METHOD FOR MODIFYING THE OPERATING CONDITIONS OF AN ELECTRONIC DEVICE COMPRISING AN INFRARED DETECTION SYSTEM

(30) Priorité: 03.08.2001 FR 0110425
(43) Date de publication de la demande: 28.04.2004
(73) Titulaire: Les Robinets Presto, 92120 Montrouge (FR)
(72) Inventeur: DUTHEIL, Daniel, F-17132 Meshers (FR)
(74) Mandataire: Vander-Heym, Serge Henri Marcel
(86) Numéro de dépôt international: PCT/FR2002/002725
(87) Numéro de publication internationale: WO 2003/014846

(56) Documents cités:
- EP-A- 0 940 507
- DE-A- 4 340 933
- DE-A- 4 420 335
- US-A- 5 410 150

## Description

La présente invention est relative à un procédé permettant d'intervenir sur le fonctionnement d'un dispositif électronique comportant un système de détection à infrarouge, tel que, par exemple un robinet à commande électronique.

Un tel robinet comporte des moyens pour détecter la présence d'un usager et des moyens pour déclencher un cycle d'écoulement d'eau prédéterminé.

Le dispositif émet un signal infrarouge invisible qui, en se réfléchissant sur l'utilisateur, génère un signal de commande qui déclenche le cycle, ledit dispositif étant piloté par un microcontrôleur (tel qu'un microprocesseur intégrant une mémoire temporaire) associé à une EEPROM (mémoire ROM).

Généralement, ces dispositifs présentent plusieurs cycles de fonctionnement déterminés par des paramètres préenregistrés dans l'EEPROM. Ces paramètres sont très variés et peuvent viser la distance de détection, l'instant du déclenchement du cycle, temps de rinçage etc.

Jusqu'à présent, lors de l'installation d'un tel dispositif, l'utilisateur choisissait initialement le cycle de fonctionnement et il ne pouvait plus en changer sauf à intervenir physiquement sur le circuit électronique après ouverture d'un boîtier avec tous les risques que cela présentait.

Le problème posé consiste donc à pouvoir modifier le cycle de fonctionnement de l'appareil sans intervenir physiquement sur ce dernier.

Le dispositif comportant un récepteur de signal infrarouge, on peut concevoir un procédé d'intervention consistant à commander le changement de cycle grâce à une télécommande analogue à celle utilisée pour changer la sélection de canal sur un récepteur de télévision.

L'expérience a montré que cette solution ne peut pas être appliquée de façon satisfaisante au présent système. Il apparaît en effet que la détention d'un tel appareil, toujours coûteux, n'est pas justifiée pour une utilisation très épisodique : lorsque le cycle est choisi par l'utilisateur, lors de la mise en route de l'installation, ce dernier n'a que rarement le besoin de le modifier. D'ailleurs, lorsque le cas se présente, il n'est plus certain que la télécommande soit en état de marche (pile hors d'usage). A cela s'ajoute l'inconvénient que le système sur lequel on est censé intervenir doit être "en veille" afin de pouvoir, à tout moment, recevoir l'information provenant de la télécommande. Cette obligation augmente la consommation électrique des systèmes et c'est un grave inconvénient lorsqu'on sait que ceux-ci, pour des raisons de facilité d'implantation et de sécurité, sont alimentés par piles.

Dans la demande de brevet européen N°940507, il est décrit un dispositif qui tente de résoudre le problème ci-dessus.

Les moyens mis en oeuvre partent du phénomène, bien connu, que l'intensité du signal optique réfléchi est d'autant plus important que l'obstacle est proche du récepteur.

De ce fait, le dispositif électronique de commande du robinet, décrit dans la demande ci-dessus, est équipé d'un compteur de temps qui après avoir constaté la permanence pendant un certain d'un signal de réception à un niveau important, fait basculer ledit dispositif du mode de fonctionnement "normal" en mode de fonctionnement dit de "communication", mode permettant, par une programmation judicieuse, de modifier le cycle de fonctionnement si, dans des conditions particulières, le dispositif constate la présence d'un signal de réception d'un niveau important.

Pratiquement, le document précité préconise de maintenir la main relativement proche de l'émetteur et du récepteur, à une distance de l'ordre de 5 à 10 centimètres pendant 10 secondes.

Il apparaît qu'un tel dispositif n'est pas fiable car un usager peut perturber, de façon non intentionnelle, le fonctionnement du robinet dont l'orifice de sortie de l'eau est généralement situé à une distance du dispositif de détection dont la valeur est comprise dans la fourchette indiquée ci-dessus.

Le procédé de l'invention, qui remédie à ces inconvénients, est remarquable en ce que le système émet, outre le signal de détection usuel, un second signal, de faible énergie, ne pouvant pas, dans des conditions normales d'utilisation, être réfléchi par l'utilisateur, et en ce que ledit signal peut être réfléchi uniquement lorsqu'on place un réflecteur passif au plus près de l'ensemble émetteur-récepteur.

Ce réflecteur peut être constitué par un objet réfléchissant en forme d'ellipsoïde que l'intervenant approche au plus près, du robinet par exemple, de façon à coiffer l'ensemble émetteur-récepteur.

Le système est programmé de façon à interrompre la marche normale de l'appareil dès qu'il constate le retour de ce signal de faible énergie : l'appareil entre en mode communication. C'est le temps pendant lequel le réflecteur reste en place qui détermine le passage en mode communication.

Selon l'invention, le signal de détection est constitué par l'alternance périodique de deux trains d'impulsions l'un, d'une puissance normale pour détecter la présence d'un usager et l'autre, d'une puissance très faible nécessitant l'utilisation du réflecteur spécial.

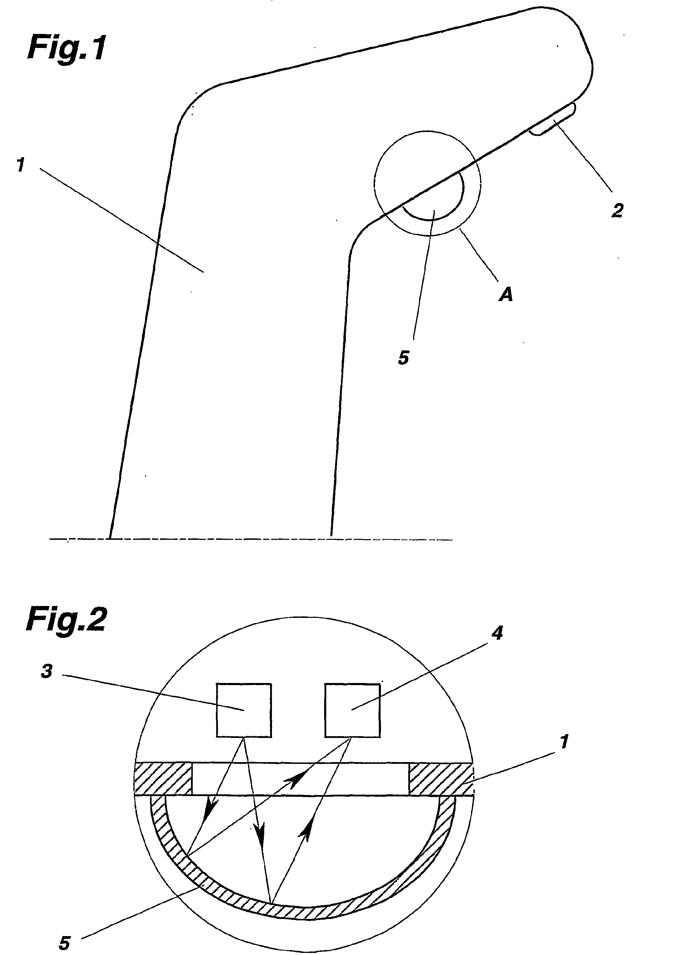

Sur le dessin annexé, la figure 1 est une vue schématique d'un robinet et la figure 2 est une vue, en coupe et à plus grande échelle, du détail A de la figure 1.

En se reportant au dessin, on voit que 1 est un robinet usuel comportant un orifice 2 de sortie de l'eau un émetteur 3 et un récepteur 4.

Selon l'invention, le signal de faible puissance est renvoyé vers le récepteur par l'entremise d'un réflecteur 5, que le gestionnaire place en contact avec le robinet lorsqu'il désire passer en mode communication.

Ce petit réflecteur peut affecter la forme d'un ellipsoïde et être métallique ou en une matière plastique revêtue d'une couche de matière réfléchissante.

Le dispositif est complété par une source lumineuse, telle qu'une une diode, qui clignote lorsque le dispositif est en mode communication, le type de clignotement correspondant à un cycle déterminé. Ainsi, si le dispositif dispose de quatre cycles possibles, la diode clignotera de quatre façons différentes.

A partir du moment où le dispositif est en mode communication, chaque fois que le réflecteur est placé dans la position représentée sur le dessin, le dispositif incrémente de 1 le cycle, ce qui signifie que si les quatre cycles possibles sont repérés par des numéros de 1 à 4 et que le mode de clignotement correspond, par exemple, au cycle N°3, un passage du réflecteur activera le cycle N°4, un nouveau passage activera le cycle N°1 et ainsi de suite. A chaque passage, le clignotement de la diode sera modifié pour adopter le mode de clignotement caractérisant le cycle activé.

Si, pendant un certain temps, le récepteur ne reçoit aucun signal, le dispositif bascule en mode normal.

Chaque cycle est défini par des valeurs de paramètres déterminées initialement et inscrites dans l'EEPROM.

Le problème posé consiste aussi à communiquer avec le dispositif pour modifier la valeur de ces paramètres.

Selon l'invention, on utilise une tête d'émission-réception infrarouge connectée au port série d'un micro-ordinateur, le transfert des informations du dispositif vers l'ordinateur ou inversement ne pouvant se faire que lorsque le dispositif a basculé en mode communication par l'utilisation du réflecteur 5.

Comme pour le choix du cycle, l'absence de signal pendant un certain temps autorise le dispositif à basculer en mode normal, un tel état peut être obtenu, aussi, par l'envoi d'un ordre à partir de l'ordinateur.

Naturellement, à partir du moment où le dispositif passe en mode communication, la fonction principale du dispositif est bloquée : l'écoulement de l'eau est stopé dans le cas d'un robinet.

## Revendications

1. Procédé pour intervenir sur le fonctionnement d'un dispositif électronique comportant un émetteur (3) émettant un signal infrarouge de détection pouvant être réfléchi par l'usager vers un récepteur (4), **caractérisé en ce que** le dispositif émet un second signal infrarouge de faible puissance ne pouvant être réfléchi que par l'entremise d'un réflecteur passif (5) placé au plus près de l'ensemble de détection, la détection de ce signal interrompant la marche normale de l'appareil pour le faire passer en mode communication.

2. Procédé selon la revendication 1, selon lequel le signal de détection est constitué par l'alternance périodique de deux trains d'impulsions l'un, de puissance normale et l'autre, de puissance très faible nécessitant, pour être réfléchi l'utilisation du réflecteur passif.

3. Procédé selon l'une quelconque des revendications 1 et 2, **caractérisé en ce que** le réflecteur (5) est constitué par un objet réfléchissant en forme d'ellipsoïde.

4. Procédé selon l'une quelconque des revendications 1 à 3, **caractérisé en ce qu'**il est couplé avec une source lumineuse, telle qu'une diode, dont le mode de clignotement caractérise le cycle activé .

5. Procédé selon l'une quelconque des revendications 1 à 4, consistant à communiquer avec le dispositif par l'entremise d'une tête d'émission-réception infrarouge relié au port série d'un ordinateur.

## Claims

1. A method for intervening in the operation of an electronic device comprising a transmitter (3) emitting a detection infrared signal that can be reflected by the user towards a receiver (4), **characterised in that** the device emits a second low-power infrared signal that can only be reflected with the intervention of a passive reflector (5) placed as close to the detection assembly as possible, the detection of this signal interrupting the normal operation of the device to bring it into communication mode.

2. A method according to claim 1, according to which the detection signal consists of periodic alternation of two pulse trains, one of which has normal power and the other very low power, requiring the use of the passive reflector in order to be reflected.

3. A method according to either of the claims 1 or 2, **characterised in that** the reflector (5) consists of an ellipsoid-shaped reflecting object.

4. A method according to any one of the claims from 1 to 3, **characterised in that** it is coupled with a light source such as a diode, the flashing mode of which characterises the active cycle.

5. A method according to any one of the claims from 1 to 4, consisting of communicating with the device by the intervention of an infrared transceiver head connected to the serial port of a computer.

## Patentansprüche

1. Verfahren für den Eingriff auf die Funktion einer elektronischen Vorrichtung mit einem Sender (3), der ein Infrarot-Erfassungssignal sendet, das von dem Benutzer an einen Empfänger (4) abgestrahlt werden kann, **dadurch gekennzeichnet, dass** die Vorrichtung ein zweites Infrarotsignal schwacher Leistung sendet, das nur über einen passiven Reflektor (5) abgestrahlt werden kann, der möglichst in der Nähe der Erfassungseinheit angeordnet ist, wobei die Erfassung dieses Signals den normalen Betrieb des Geräts unterbricht, um es in den Kommunikationsmodus zu versetzen.

2. Verfahren gemäß Anspruch 1, bei dem das Erfassungssignal aus der periodischen Abwechselung von zwei Impulsfolgen besteht, eine mit normaler Leistung und die andere mit sehr schwacher Leistung, die für ihre Abstrahlung die Verwendung des passiven Reflektors benötigt.

3. Verfahren gemäß einem der Ansprüche 1 und 2, **dadurch gekennzeichnet, dass** der Reflektor (5) aus einem etwa ellipsenförmigen Abstrahlungsobjekt besteht.

4. Verfahren gemäß einem der Ansprüche 1 bis 3, **dadurch gekennzeichnet, dass** es mit einer Lichtquelle, beispielsweise mit einer Diode, gekoppelt ist, deren Blinkweise den aktivierten Zyklus kennzeichnet.

5. Verfahren gemäß einem der Ansprüche 1 bis 4, das darin besteht, über einen mit dem Serienanschluss eines Computers verbundenen Infrarotsender- und Empfängerkopf mit der Vorrichtung zu kommunizieren.
